# EUROPEAN PATENT APPLICATION

(11) **EP 2 599 999 A1**
(43) Date of publication of application: **05.06.2013**
(21) Application number: 11191728.2
(22) Date of filing: 02.12.2011
(51) Int. Cl.: F03D 11/00

(54) **Extruded aluminium radiator**

(71) Applicant: Siemens Aktiengesellschaft, 80333 München (DE)
(72) Inventor: Christiansen, Lars Fuglsang, 9000 Aalborg (DK); Stege, Jason, 7330 Brande (DK)

(57) **Abstract**

The present invention relates to a wind turbine (100) comprising a nacelle (101) and a radiator (110). The nacelle (101) comprises an outer surface (102) being exposed to air surrounding the nacelle (101), wherein the outer surface (102) comprises a mounting area (103) having an outer contour. The radiator (110) is adapted for transferring thermal energy to the air surrounding the nacelle (101). The radiator (110) comprises an inner surface (111) having an inner contour, wherein the radiator (110) is mounted by its inner surface (111) to the mounting area (103) of the nacelle (101). The inner contour is formed complementary with respect to the outer contour of the mounting area (103), such that the radiator (110) is spatially adapted to the outer surface (102) of the nacelle (101).

## Description

### Field of invention

The present invention relates to a wind turbine and a method of manufacturing a wind turbine.

### Art Background

Modern wind turbines generate more and more power. Therefore, the sizes of the wind turbine components, e.g. the diameter of a generator or the length of wind turbine blades, increase. By generating more and more power, also the lost heat increases. In order to provide a sufficient cooling of the wind turbine, large radiators have to be installed at the wind turbine.

A conventional passive radiator for a wind turbine, for example for a direct drive wind turbine, is mounted to the wind turbine in such a way that the radiator juts away from e.g. a nacelle of a wind turbine. Hence, it is difficult to transport the nacelle of the wind turbine together with the radiator, because the radiator juts out from the nacelle and the resulting size of both, the nacelle and the radiator, is too large for transportation.

### Summary of the Invention

It may be an objective of the present invention to provide a compact wind turbine.

This objective may be solved by a wind turbine and by a method of manufacturing a wind turbine according to the independent claims.

According to a first aspect of the present invention, a wind turbine is presented. The wind turbine comprises a nacelle and a radiator for transferring thermal energy to the air surrounding the nacelle. The nacelle comprises an outer surface which is exposed to air surrounding the nacelle, wherein the outer surface comprises a mounting area having an outer contour.

The radiator comprises an inner surface having an inner contour, wherein the radiator is mounted by its inner surface to the mounting area of the nacelle. The inner contour is formed complimentary with respect to the outer contour of the mounting area, such that the radiator is spatially adapted and/or fits snuggly to the outer surface of the nacelle.

According to a further aspect of the present invention, a method is presented, wherein according to the method an above described wind turbine is manufactured. According to the method, the nacelle and the radiator is provided, wherein the radiator is mounted to the mounting area.

The nacelle of a wind turbine may denote a housing, in which the functional devices, such as the generator, the gear and other functional components of the wind turbine, are housed. The nacelle is pivotably mounted to a wind turbine tower. Moreover, the wind turbine blades are coupled by a driving shaft to the generator inside the nacelle.

The nacelle comprises an outer surface, which may denote the surface of the nacelle which is exposed to the air surrounding the nacelle and the wind turbine, respectively.

The outer surface comprises a mounting area, wherein the mounting area describes the area of the outer surface at which the radiator is mounted. Furthermore, the mounting area is the area of the outer surface which is covered by the radiator. In particular, a projection of the radiator onto the outer surface along a normal direction of the outer surface may describe the mounting area. Furthermore, for example mounting provisions, such as bore holes or pins, for being coupled with the radiator may be installed at the mounting area.

The mounting area comprises an outer contour, wherein the outer contour describes the shape and the profile of the mounting area of the outer surface. The outer contour may describe a flat and even shape along a plane, such that the mounting area has essentially a two-dimensional extension. Furthermore, the outer contour may describe a curvature and chambered shape, such that the outer contour comprises a three-dimensional extension.

In particular, the nacelle may comprise a substantially cylindrical shape, wherein the outer surface describes a curvature and thus the skin surface of the nacelle. The radiator comprises a large contact surface with the air surrounding the nacelle. Hence, by the large contact surface, thermal energy is transferrable to the air surrounding the nacelle. Hence, the radiator may cool the temperature of the nacelle and of further wind turbine components. Therefore, the radiator may be in thermal contact with the outer surface of the nacelle, such that a heat transfer is generated.

In a further exemplary embodiment, as described more in detail below, the radiator may additionally comprise a fluid conduit such that also a liquid cooling is provided by the radiator.

The inner surface of the radiator has the inner contour, wherein the inner contour is formed complimentary with respect to the outer contour of the mounting area. For this reason, the radiator may be spatially adapted and may fit snuggly to the outer surface of the nacelle. If the inner contour is for example complimentary with respect to the outer contour of the mounting area, the inner surface may have the same or at least approximately the same curvature with respect to the outer surface. Only the curvatures may have different radii with respect to each other, for example.

Hence, a protruding or a jutting out of the radiator from the outer surface of the nacelle due to unequal inner and outer (coupling) contours of the nacelle and the radiator are reduced. In other words, the radiator may extend (e.g. with its length or width) and run along the outer surface of the nacelle, wherein the distance between the inner surface and the outer surface is kept constant due to the aligned inner and outer contour. In a further exemplary embodiment, the inner surface may contact the outer surface, wherein a large contact area between the inner surface and the outer surface is generated due to the aligned inner and outer contour. Hence, the heat transfer between the inner surface and the outer surface is improved.

Hence, the radiator is spatially aligned and/or fits snuggly with its inner surface to the outer surface of the nacelle, such that protruding of the radiator out from the nacelle is reduced, so that a more compact design of the wind turbine, i.e. the radiator and the nacelle, is generated. Hence, for transportation reasons it is not longer necessary to transport the nacelle and the radiator independent from each other, so that substantial shipping and assembly costs may be reduced.

The radiator may be formed by an extruded aluminum profile. Hence, the radiator may be produced inexpensive. In particular, by the use of aluminum, an inexpensive and easy extrusion is possible. Moreover, by an extrusion of the radiator by extruded aluminum, further features, such as a fluid conduit providing a fluid flow inside the radiator and coupling elements for mounting the radiator to the nacelle, can be formed integrally within the radiator by applying an extrusion process.

The radiator covers the mounting area of the outer surface of the nacelle. In particular, the nacelle may comprise a top section (roof part) which is the vertically highest section of the nacelle with respect to the ground when being installed on the wind turbine tower. In an exemplary embodiment, the mounting area is formed at the top part of the nacelle. Hence, e.g. by an operation of the wind turbine, the radiator mounted to the mounting area is not visible from the ground, for example. Furthermore, the radiator may be formed robust enough, so that the radiator may also act as a walking surface for a worker who walks along the nacelle for turbine maintenance. Moreover, the radiator may be robust enough for being used as a helicopter landing platform. If the radiator, i.e. the mounting area, is located at the top part of the nacelle, the radiator may also act as a roof section of the nacelle, such that further provisions for a separated walking surface may be obsolete and hence a saving of material which would be required for the nacelle canopy or walking surface may be reduced.

Hence, by the above described wind turbine, the radiator and the nacelle may be assembled and tested together in the factory and not on site. Furthermore, also the transportation costs and logistics may be reduced, because the radiator may be installed and tested already in the factory.

According to a further exemplary embodiment, the mounting area comprises a recess in which the radiator is mountable. Hence, between the radiator and the outer surface of the nacelle which surrounds the mounting area, a step and unsteady run or junction is reduced.

In an exemplary embodiment, the radiator comprises a further outer surface with a further outer contour which is formed at an opposed end of the radiator with respect to an end of the radiator at which the inner surface is formed. In other words, the further outer surface describes the surface of the radiator which is directed away from the nacelle and which is exposed to the air surrounding the nacelle.

By mounting the radiator into a recess of the mounting area, an offset between the outer surface of the nacelle, which outer surface surrounds the mounting area, and the further outer surface of the radiator is reduced. In an exemplary embodiment, no offset between the outer surface of the nacelle, which outer surface surrounds the mounting area, and the further outer surface of the radiator is provided, such that the outer surface which surrounds the mounting area and the further outer surface of the radiator are formed homogeneously. In other words, the further outer surface and the inner surface of the radiator are spaced apart by a predefined distance (e.g. the thickness of the radiator), wherein the depth of the recess is adapted to the distance between the further outer surface and the inner surface of the radiator, i.e. adapted to the thickness of the radiator.

According to a further exemplary embodiment, the radiator has a uniform thickness such that the further outer surface comprises a further outer contour wherein the further outer contour is adapted with respect to the outer contour of the mounting area. Hence, the radiator may be mounted to the recess, wherein the radiator and particular the outer contour forms a flushy contour with the outer contour of the outer surface surrounding the mounting area. If the thickness of the radiator is uniform, the further outer contour is for example adapted with respect to the outer contour of the mounting area and the further outer surface may have the same or at least approximately the same curvature with respect to the outer surface. Only the curvatures may have different radii, for example. Hence, a more compact design is achieved.

According to a further exemplary embodiment, the radiator comprises a base element comprising the inner surface with the inner contour. A base element may be for example a plate like element, which is made from extruded aluminum material. According to a further exemplary embodiment, the base element comprises a fluid conduit which is formed in the base element. The fluid conduit is coupled to a cooling system of the wind turbine such that the fluid is guidable through the fluid conduit for cooling the fluid by the air surrounding the wind turbine. Hence, the radiator may enhance the fluid cooling of the wind turbine, for example. The fluid conduit may be formed inside the body of the base element. Moreover, the fluid conduit may be formed by tubes which are attached, e.g. by welding to the base element, for example. Furthermore, the fluid conduit may run in or along the base element such that a larger contact area between the fluid conduit and the base element is achieved and such that a more effective heat transfer between the fluid inside the fluid conduit and the air surrounding the base element is provided.

According to a further exemplary embodiment, the radiator further comprises a plurality of fins protruding from the further outer contour. Hence, by providing a plurality of fins, the contact surface exposed to the air surrounding the wind turbine is increased, such that a more efficient heat transfer is achieved.

According to a further exemplary embodiment, the further outer contour runs within a plane having a normal, wherein at least one of the pluralities of fins protrudes from the further outer contour along the normal.

The plane may extend two-dimensional along two directions. Hence, the outer surface (and its further outer contour) may be a planar surface. Moreover, the plane may extend along three directions and hence form a curved plane, for example. Hence, the outer surface (and its further outer contour) may be a curved surface.

According to a further exemplary embodiment, two of the pluralities of fins protrude from the further outer contour in a parallel manner.

According to a further exemplary embodiment, at least two of the pluralities of fins have an identical length.

Furthermore, each end sections of adjacent fins are spaced apart from each other by a predetermined distance, which is smaller than approximately 12 cm.

Hence, if the distance between two end sections of adjacent fins is smaller than approximately 12 cm, a walking surface is formed. If the distance is smaller than 12 cm, the risk that a worker, walking onto the top (i.e. onto the end sections) of the fins, sinks with his foot into the space between adjacent fins is reduced. Hence, a worker which has to move along the nacelle for e.g. maintenance purposes may walk onto the radiator. Hence, further provisions for providing a walking surface are not necessary.

According to a further exemplary embodiment, at least one of the plurality of fins comprises a further fluid conduit which runs within the respective fin. The further fluid conduit is coupled to the cooling system of the wind turbine such that the fluid is guidable through the further fluid conduit for cooling the fluid by the air surrounding the wind turbine. The further fluid conduit may be formed by an inner volume of a fin, for instance. Furthermore, the further fluid conduit may be connected to the fluid conduit of the base element.

According to a further exemplary embodiment, the wind turbine further comprises a mounting rail which is mounted to the mounting area of the nacelle and the inner contour of the radiator, such that the radiator is spaced apart from the mounting area by the mounting rail. The mounting rail comprises a further contour which is formed complementary with respect to the outer contour of the mounting area, such that a mounting rail is spatially adapted and e.g. fits snuggly to the outer surface of the nacelle.

Moreover, the mounting rail may comprise a uniform thickness and hence comprises an outer contour of the rail which is adapted to the inner contour of the radiator. Hence, the radiator is homogeneously supported by the mounting rail, because the rail may fit snugly to the outer contour of the mounting area. Moreover, a plurality of mounting rails may be attached between the radiator and the mounting area for enhancing the mounting of the radiator to the nacelle.

According to a further exemplary embodiment, the radiator comprises a first radiator element and a second radiator element. The first radiator element and the second radiator element are detachably coupled.

Hence, standardized sized radiator elements may be manufactured, wherein each radiator element may be connected until a desired size of a radiator is formed. Hence, by manufacturing standardized radiator elements, manufacturing costs may be reduced.

The first radiator element may comprise a first coupling element, wherein the second radiator element may comprise a second coupling element, wherein the first coupling element and the second coupling element may be coupled for providing a detachably fixation between the first radiator element and the second radiator element. For example, the first coupling element may be a groove, wherein the second coupling element may be a pin. For example, by the first coupling element and the second coupling element a key and slot connection, in particular a dove tail connection, may be formed. Furthermore, a first coupling element and a second coupling element may form a nut and bolt connection, for example.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig.1 shows a schematical view of a wind turbine according to an exemplary embodiment of the present invention; and
Fig. 2 shows a schematical view of a first radiator element and a second radiator element according to an exemplary embodiment of the present invention.

### Detailed Description

The illustrations in the drawings are schematical. It is noted that in different figures, similar or identical elements are provided with the same reference signs.

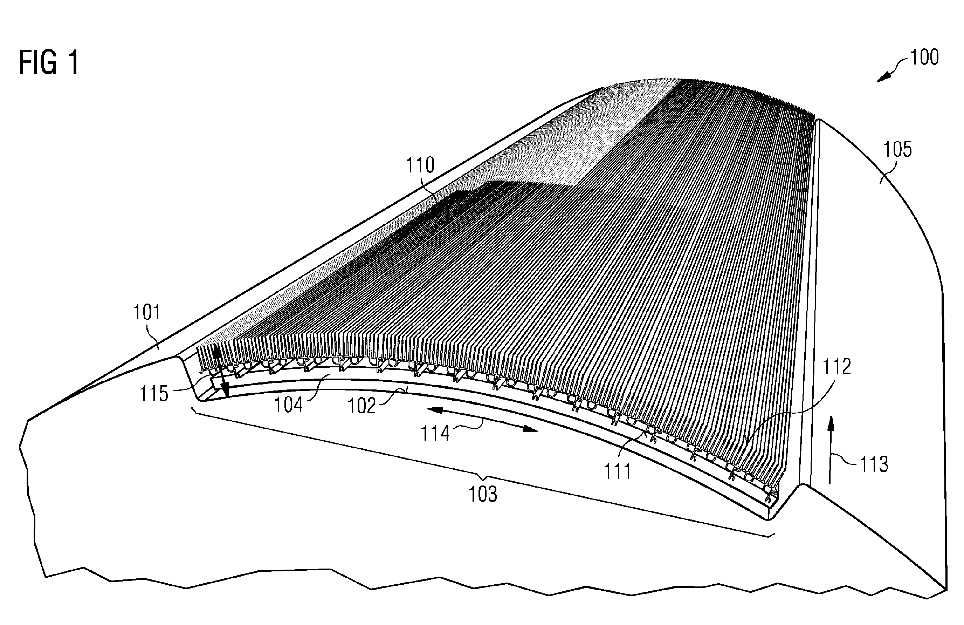

Fig. 1 shows a wind turbine 100 which comprises a nacelle 101 and a radiator 110 for transferring thermal energy to air surrounding the nacelle 101. The nacelle 101 comprises an outer surface 102 which is exposed to air surrounding the nacelle 101. The radiator 110 comprises an inner surface 111 with an inner contour. The radiator 110 is mounted by the inner surface to the mounting area 103 of an outer surface 102 of the nacelle 101.

The inner contour is formed complimentary with respect to the outer contour of the mounting area 103 such that the radiator 110 spatially adapted to the outer surface 102 of the nacelle 101.

As shown in Fig. 1, the mounting area 103 comprises a recess under which the radiator 110 is located.

As shown in Fig. 1, the outer surface of the nacelle 101 and in particular the outer surface 102 of the mounting area 103 forms a substantially cylindrical shape, wherein the outer surface 102 describes the lateral area or the skin surface of the nacelle 101. The inner surface 110 with its inner contour is formed complimentary with respect to the outer contour of the mounting area 103.

The radiator 110 has a length 113, a width 114 and a thickness 115. The length 113 and the width 114 of the radiator 110 describe a size of the radiator along the outer surface 102 of the nacelle 101. The thickness 115 of the radiator describes the extension of the radiator 110 along a direction that is parallel to a normal direction of a surface plane of the outer surface 102. As shown in Fig. 1, the thickness 115 of the radiator 110 may comply with the depth of the recess of the mounting area 103 in which the radiator 110 is located.

The depth of the recess may be designed in such a way that at an interface between a further outer surface 112 of the radiator 110 and a surface 105 surrounding the mounting area 103 is formed homogeneously without a step or offset, for example.

Furthermore, between an inner surface 111 of the radiator 110 and the outer surface 102 of the nacelle 101 a mounting rail 104 may be interposed. Hence, the inner surface of the radiator 110 may be spaced by a predefined distance from the outer surface 102.

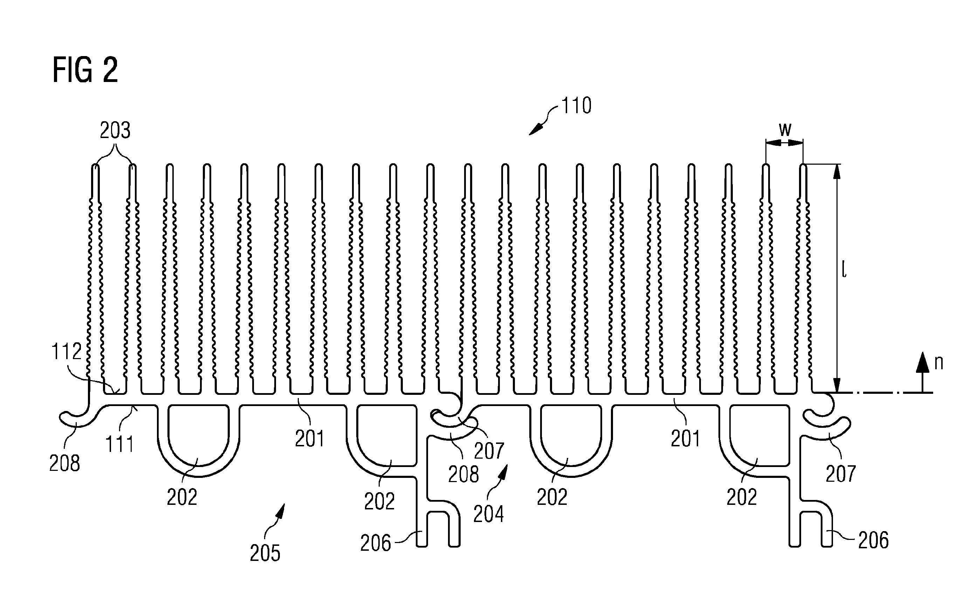

Fig. 2 shows a detailed view of the radiator 110. The radiator 110 shown in Fig. 2 comprises a first radiator element 204 and a second radiator element 205. Each radiator element 204, 205 comprise a respective base element 201. The base element 201 comprises the inner surface 111 with the inner contour. The base element 201 is designed as e.g. a plate like element, wherein the base element 201 may have the length 113 of the radiator and/or the width 114 of the radiator 110.

To the first radiator element 204 and/or the second radiator element 205 respective fluid conduits 202 are formed. The fluid conduits 202 may be integrally formed to the first and/or second radiator elements 204, 205. The fluid conduits 202 are coupled to a cooling system of the wind turbine, such that the fluid is guidable through the conduits 202 for cooling the fluid by the air surrounding the wind turbine.

The first radiator element 204 and the second radiator element 205 may be detachably coupled to each other. For example, the first radiator element 204 may comprise a coupling element 207 and the second radiator element 205 may comprise a second coupling element 208. The first coupling element 207 may be engaged by the second coupling element 208 such that the first radiator element 204 is fixed to the second radiator element 205. As shown in an exemplary embodiment in Fig. 2, the first radiator element 204 may form for example a curved pin, which is engaged by a curved groove of the second coupling element 208.

Furthermore, the first radiator element 204 and/or the second radiator element 205 may comprise a fixing element 206. As shown in Fig. 2, the fixing element 206 may form a groove at an open end. For example, the mounting rail 104 as shown in Fig. 1 may be engaged by the groove of the fixing element 206, such that the respective first and second radiator element 204, 205 are fixed to the nacelle 101 by its respective fixing elements 206.

Fig. 2 shows furthermore a plurality of fins 203. The fins 203 are made for example of the same material as the base element 201. The fins 203 may be formed integrally with the base element 201. The fins 203 may protrude from the base element 201 in a direction to the air surrounding the nacelle 101, e.g. along a direction of a normal of the outer surface 102 if the nacelle 101.

As shown in Fig. 2, the fins 203 may be formed parallel to each other. Between end sections (free ends) of two adjacent fins 203 a defined distance w is shown. If the distance w between two adjacent fins 203 is designed small enough, the radiator 110 may be used as a walking surface, because the risk that a worker sinks with his foot between the space between two adjacent fins 203 is reduced.

In particular, in order to provide a comfortable walking surface, the fins 203 protrude from the base element 201 further along a normal n of a plane along which the outer surface 102 runs along. Additionally, the fins 203 may comprise an identical length 1.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Wind turbine (100), comprising
a nacelle (101) comprising an outer surface (102) being exposed to air surrounding the nacelle (101),
wherein the outer surface (102) comprises a mounting area (103) having an outer contour, and
a radiator (110) for transferring thermal energy to the air surrounding the nacelle (101),
wherein the radiator (110) comprises an inner surface (111) having an inner contour,
wherein the radiator (110) is mounted by its inner surface (111) to the mounting area (103) of the nacelle (101), and
wherein the inner contour is formed complementary with respect to the outer contour of the mounting area (103), such that the radiator (110) is spatially adapted to the outer surface (102) of the nacelle (101).

2. Wind turbine (100) according to claim 1,
wherein the mounting area (103) comprises a recess in which the radiator (110) is installed.

3. Wind turbine (100) according to claim 1 or 2,
a further outer surface (112) with a further outer contour which is formed at an opposed end of the radiator (110) with respect to an end of the radiator (110) at which the inner surface (111) is formed, and
wherein the radiator (110) has a uniform thickness such that the further outer contour is adapted with respect to the outer contour of the mounting area (103).

4. Wind turbine (100) according to one of the claims 1 to 3,
wherein the radiator (110) comprises a base element (201) comprising the inner surface (111) with the inner contour.

5. Wind turbine (100) according to claim 4,
wherein the base element (201) comprises a fluid conduit (202) which is formed within the base element (201), and
wherein the fluid conduit (202) is formed in such a way that a fluid is guidable through the fluid conduit (202) for cooling the fluid by the air surrounding the wind turbine.

6. Wind turbine (100) according to claim 4 or 5,
wherein the radiator (110) further comprises a plurality of fins (203) protruding from the base element (201).

7. Wind turbine (100) according to claim 6,
wherein the further outer surface (112) runs within a plane having a normal (n),
wherein at least one of the plurality of fins (203) protrudes from the further outer contour along the normal (n).

8. Wind turbine (100) according to claim 6 or 7,
wherein at least two of the plurality of fins (203) have an identical length (1).

9. Wind turbine (100) according to one of the claims 6 to 8,
wherein end sections of adjacent fins (203) are spaced apart from each other by a predefined distance (w) which is smaller than 12 cm.

10. Wind turbine (100) according to one of the claims 6 to 9,
wherein at least one of the plurality of fins (203) comprises a further fluid conduit which runs within the respective fin (203), and
wherein the further fluid conduit is formed in such a way that a fluid is guidable through the further fluid conduit for cooling the fluid by the air surrounding the wind turbine.

11. Wind turbine (100) according to one of the claims 4 to 10, further comprising
a mounting rail (104) which is mounted to the mounting area (103) of the nacelle (101) and the inner contour of the radiator (110), such that the radiator (110) is spaced apart from the mounting area (103) by the mounting rail (104),
wherein the mounting rail (104) comprises a further inner contour which is formed complementary with respect to the outer contour of the mounting area (103), such that the mounting rail (104) is spatially adapted to the outer surface (102) of the nacelle (101).

12. Wind turbine (100) according to one of the claims 1 to 11,
wherein the radiator (110) comprises a first radiator element (204) and a second radiator element (205),
wherein the first radiator element (204) and the second radiator element (205) are detachably coupled.

13. Method of manufacturing a wind turbine according to one of the claims 1 to 12, the method comprising
providing the nacelle and the radiator, and
mounting the radiator to the mounting area.
